# EUROPÄISCHE PATENTSCHRIFT

(11) **EP 3 924 988 B1**
(45) Veröffentlichungstag und Bekanntmachung des Hinweises auf die Patenterteilung: **05.04.2023**
(21) Anmeldenummer: 20705934.6
(22) Anmeldetag: 14.02.2020
(51) Int. Cl.: H01F 41/071, H01F 41/098, H02K 3/18, H02K 15/04

(54) **VERFAHREN ZUR HERSTELLUNG EINES WENDELFÖRMIGEN KÖRPERS MIT KOMPRESSION DER WENDEL**
METHOD FOR PRODUCING A SPIRAL-SHAPED BODY WITH A COMPRESSED SPIRAL
PROCÉDÉ DE FABRICATION D'UN CORPS EN SPIRALE AVEC COMPRESSION DE LA SPIRALE

(30) Priorität: 15.02.2019 DE 102019202049
(43) Veröffentlichungstag der Anmeldung: 22.12.2021
(73) Patentinhaber: Fraunhofer-Gesellschaft zur Förderung der angewandten Forschung e.V., 80686 München (DE)
(72) Erfinder: BUSSE, Matthias, 28359 Bremen (DE); WÖSTMANN, Franz-Josef, 28359 Bremen (DE)
(74) Vertreter: Pfenning, Meinig & Partner mbB
(86) Internationale Anmeldenummer: PCT/EP2020/053953
(87) Internationale Veröffentlichungsnummer: WO 2020/165435

(56) Entgegenhaltungen:
- DE-A1-102014 000 636
- JP-A- 2005 310 566
- JP-A- 2005 319 479
- JP-A- 2006 158 024

## Beschreibung

Die Erfindung liegt auf dem Gebiet des Maschinenbaus und ist mit besonderem Vorteil im Bereich der Gießereitechnik beim Herstellen von Wendeln im Metallguss einsetzbar.

Wendelförmige metallische Körper sind für viele verschiedene Zwecke in der Elektrotechnik und Mechanik, zum Beispiel als Federn oder elektrische Spulen, verwendbar. Für den Einsatz bei elektrischen Maschinen kommen bisher überwiegend gewickelte Spulen zum Einsatz, die durch Aufwickeln von strangförmigen metallischen Körpern, beispielsweise Drähten, gefertigt werden. Bei dieser Fertigungstechnik wird der zur Verfügung stehende Bauraum oft nicht optimal ausgefüllt. Insbesondere dann, wenn solche Spulen keine Zylinderform aufweisen, ist beim Wickeln die Herstellung oft mit zusätzlichem manuellem Aufwand verbunden.

Zur Erhöhung des Füllgrades und um die Leistungs- bzw. Drehmomentdichte von elektrischen Maschinen mit derartigen Wicklungen/Spulen zu erhöhen, ist es bereits vorgeschlagen worden, derartige wendelförmige Körper im Metallgussverfahren herzustellen. Dies ermöglicht eine große Freiheit bei der Gestaltung der Querschnitte und der äußeren Form einer derartigen Wendel. Insbesondere kann beispielsweise auch der Querschnitt einzelner Windungen frei gestaltet werden. Durch eine optimierte Raumnutzung und Wärmeabfuhr kann sowohl die elektrische Leistung als auch die Effizienz der Wärmeabfuhr optimiert werden. Die gusstechnische Herstellung von Wendeln und elektrischen Spulen bringt jedoch in der Fertigung andere Nachteile mit sich.

Aus der JP 2006 158024 A, der JP 2005 319479A, der JP 2005 310566A und der DE 10 2014000636 A1 sind Verfahren und Vorrichtungen zur Herstellung von wendelförmigen Körpern bekannt, bei denen ein strangförmiges Material auf einen Dorn gewickelt und komprimiert wird.

Der vorliegenden Erfindung liegt vor dem Hintergrund des Standes der Technik die Aufgabe zugrunde, ein Verfahren zur Herstellung eines wendelförmigen Körpers, insbesondere einer elektrischen Spule, zu schaffen, das eine optimale Raumnutzung durch das entstehende Produkt ermöglicht und dabei den Fertigungsaufwand minimiert.

Die Aufgabe wird gemäß der Erfindung mit den Merkmalen des Patentanspruchs 1 gelöst. Die abhängigen Patentansprüche 2 bis 8 stellen mögliche Implementierungen eines Verfahrens zur Herstellung eines wendelförmigen Körpers vor. Zudem bezieht sich die Erfindung auf eine Vorrichtung mit den Merkmalen des Patentanspruchs 9 und auf mögliche Ausführungsformen einer solchen Vorrichtung.

Demgemäß bezieht sich die Erfindung auf ein Verfahren zur Herstellung eines wendelförmigen Körpers, insbesondere einer elektrischen Spule, aus einem elektrisch leitfähigen Material, bei dem zunächst das Material in Strangform zu einer Wendel mit einer Mehrzahl von Windungen um einen Dorn gewickelt wird, danach der Dorn und die Wendel vor dem Ausüben eines Drucks in einer Matrize platziert wird und eine mit dem Dorn fest verbundene Bodenplatte mittels einer formschlüssigen Verbindung, insbesondere eines Bajonettverschlusses, mit der Matrize verbunden wird und danach in Axialrichtung der Wendel auf diese ein Druck ausgeübt wird, der zu einer Verformung und Kompression der Querschnitte der einzelnen Windungen in der Axialrichtung der Wendel führt.

Grundsätzlich kann bei der Formung der elektrischen Spule zunächst ein gängiges Verfahren in Form des Wickelns einer Wendel verwendet werden. Danach wird durch die Ausübung von axialem Druck auf die Wendel das Material der Wendel derart verformt, dass einzelne oder alle Windungen im Querschnitt verformt werden. Dadurch wird eine dichtere Packung der Windungen in Längsrichtung der Wendel erreicht, und der Platzbedarf für die Wendel bleibt bei gleichbleibender Anzahl von Windungen verringert. Gleichzeitig können sich die Querschnitte der einzelnen Windungen in Radialrichtung ausweiten. Eine aus der Wendel gebildete elektrische Spule wird damit effizienter und platzsparender. Zudem kann durch eine verbesserte Wärmeleitung zwischen den Windungen der Wendel die thermische Leitfähigkeit insgesamt und damit die Abfuhr von Verlustwärme verbessert werden.

In einer Ausführungsform des Verfahrens kann dabei vorgesehen sein, dass mehrmals nacheinander auf die Wendel ein axialer Druck ausgeübt wird, insbesondere in Form von impulsartigen Schlägen. Damit kann eine Kompression in einem mehrstufigen Verformungsverfahren durchgeführt werden, so dass in vielen Fällen auch ohne Materialrisse oder gegebenenfalls Gefügeänderungen eine ausreichende Umformung erzielt werden kann. Eine impulsartige Druckerhöhung, beispielsweise durch Schläge, hat den Vorteil, dass kurzzeitig und dynamisch hohe Druckkräfte erzeugt werden können, ohne dass eine Vorrichtung bereitgestellt werden muss, die entsprechende Kräfte statisch erzeugt oder aushält.

Eine weitere Ausführungsform kann vorsehen, dass der Druck auf die Wendel in mehreren Schritten erhöht wird, wobei insbesondere jeweils nach einer Druckerhöhung der Druck vorübergehend wieder abgesenkt wird. Auch eine solche mehrstufige Druckerhöhung auf die Wendel kann dadurch, dass das Material der Wendel in mehreren Schritten umgeformt wird, ein vorteilhaftes Ergebnis im Sinne begrenzter Gefügeänderungen zur Folge haben.

Zur Formung der Wendel kann vorgesehen sein, dass der Dorn und die Wendel vor dem Ausüben des Drucks in einer Matrize platziert wird, die die Wendel umgibt und die eine radiale Ausdehnung der Wendel nach außen begrenzt. Mittels der Matrize wird eine radiale Ausdehnung der Wendel bei der Ausübung von axialem Druck begrenzt. Durch die Matrize kann eine äußere Zielform der Wendel definiert werden, die durch Ausübung ausreichenden axialen Drucks realisiert werden kann. Insbesondere kann die Wendel auf dem Dorn und zwischen dem Dorn und der Matrize durch Druckausübung axial komprimiert werden, bis sie den Raum zwischen dem Dorn und der Matrize ausfüllt. Hierzu werden Dorn und Matrize koaxial zueinander angeordnet und insbesondere miteinander verbunden.

Die Matrize kann einen zylindrischen oder kegelstumpfförmigen Hohlraum aufweisen, so dass die Wendel nach der Kompression ebenfalls eine zylindrische oder kegelstumpfförmige Außenkontur aufweist. Eine solche Wendel kann beispielsweise als elektrische Spule in einer rotierenden elektrischen Maschine eingesetzt werden, bei der der für einzelne Wicklung zur Verfügung stehende Bauraum ebenfalls kegelstumpfförmig ausgebildet ist.

Sowohl der Dorn als auch die Matrize können aus einem stabilen Metall, insbesondere aus Stahl, bestehen.

Das Aufwickeln der Wendel auf dem Dorn geschieht vorteilhaft vor dem Einbringen des Dorns in die Matrize, so dass eine vorteilhafte Konstruktion einen separaten Dorn und eine mit diesem verbindbare Matrize vorsieht. Der Dorn und die Matrize können dabei in dem radial engsten Bereich der Matrize miteinander verbindbar sein.

Eine weitere Ausführungsform des Verfahrens kann vorsehen, dass der Druck auf die Wendel oder die Stärke der Druckimpulse derart bemessen wird, dass bei wenigstens einer Windung der Wicklung die Höhe in Axialrichtung der Wendel um wenigstens 10%, insbesondere wenigstens 20%, reduziert wird.

Bei der axialen Komprimierung der Wendel können einzelne Windungen in dem Bereich, in dem die Matrize radial am stärksten erweitert ist, axial am stärksten komprimiert werden. In diesem Bereich ist das Verhältnis der radialen Breite einer einzelnen Windung zu ihrer Höhe in Längsrichtung der Wendel am größten und größer als in den radial engeren Bereichen der Matrize. Beispielsweise kann die Wendel derart komprimiert werden, dass für den Querschnitt des gewickelten Strangs ein Verhältnis der radialen Breite zur Höhe von 2:1 oder insbesondere sogar 5:1 erreicht wird.

In einer weiteren Ausführungsform des Verfahrens kann vorgesehen sein, dass das strangförmige Material vor oder nach dem Wickeln mit einer elektrisch isolierenden und/oder imprägnierenden Außenschicht versehen wird. Als isolierende Außenschicht kann eine Schicht vorgesehen sein, die auch bei der Verformung des strangförmigen Materials mit verformt wird, so dass die Außenschicht bei der Verformung geschlossen bleibt. Hierzu eignen sich insbesondere gut verformbare Kunststoffe. Es kann als Außenschicht beispielsweise auch eine Oxidschicht vorgesehen sein, die sich nach der Verformung der Wendel im Kontakt mit Luft an entstehenden Rissstellen neu bildet und die Windungen der Wendel elektrisch isoliert.

Es kann in einer Ausführungsform des Verfahrens auch vorgesehen sein, dass das strangförmige Material nach der Kompression der Wendel mit einer insbesondere elektrisch isolierenden und/oder imprägnierenden Außenschicht versehen wird. Dies kann beispielsweise dadurch ermöglicht werden, dass die Wendel eine Elastizität aufweist, die dazu führt, dass nach einer Kompression und Verformung der Windungen nach dem Absenken der Kompressionskraft die Wendel sich selbst elastisch ein Stück weit in Axialrichtung ausdehnt, so dass die einzelnen Windungen der Wendel einen Abstand zueinander bilden und damit für eine Beschichtung zugänglich sind. Die Beschichtung kann dann beispielsweise durch Tauchen der Wendel oder Besprühen aufgebracht werden. Es kann auch der Zwischenraum zwischen den Windungen der Wendel mit einem isolierenden Material vollständig vergossen werden, derart, dass die einzelnen Windungen der Wendel voneinander elektrisch isoliert werden. Zu diesem Zweck kann das isolierende Material so gewählt werden, dass durch Kapillarwirkung das Hineinziehen des flüssigen Materials in die Zwischenräume der Wendel bewirkt oder unterstützt wird. Der Verguss kann als Vakuumverguss durchgeführt werden. Die Verbindung zwischen der Bodenplatte des Dorns und der Matrize kann zu diesem Zweck vakuumdicht ausgebildet werden. Zum Beschichten kann die Wendel auch unter Kraftanwendung vorübergehend in Längsrichtung elastisch gedehnt werden.

Eine weitere vorteilhafte Ausgestaltung der Erfindung kann demnach vorsehen, dass die Wendel nach der Kompression mit einem Füllmaterial vergossen wird, das die Zwischenräume zwischen den Windungen der Wendel vollständig ausfüllt.

Die Erfindung bezieht sich außer auf ein Verfahren der oben erläuterten Art auch auf eine Vorrichtung zur Durchführung des Verfahrens, welche eine Matrize, eine Verbindungsvorrichtung in Form einer Bodenplatte zur Verbindung der Matrize mit einem Dorn zum Aufwickeln der Wendel sowie eine Druckvorrichtung mit einem Stempel aufweist, der insbesondere eine Ausnehmung zur Aufnahme des Dorns aufweist.

Zudem kann vorgesehen sein, dass die Matrize einen konusförmigen Hohlraum zur Aufnahme der komprimierten Wendel aufweist.

Im Folgenden wird die Erfindung anhand von Figuren einer Zeichnung dargestellt und nachfolgend erläutert. Dabei zeigt
- Fig. 1: einen Dorn, um den eine Spule gewickelt werden kann,
- Fig. 2: einen Dorn mit einer auf ihn aufgewickelten Spule,
- Fig. 3: einen Dorn mit einer auf ihn aufgewickelten Spule in einer Matrize,
- Fig. 4: einen Dorn mit einer Matrize und einem Druckwerkzeug,
- Fig. 5: einen weiteren Dorn zum Aufwickeln einer Spule,
- Fig. 6: eine auf den Dorn aufgewickelte Spule aus einem strangförmigen Material mit einer Isolierschicht,
- Fig. 7: eine gewickelte Spule mit Isolierung auf einem Dorn in einer Matrize,
- Fig. 8: eine Matrize mit einem Dorn, einer Spule und einem Druckwerkzeug,
- Fig. 9: eine Spule ohne Isolierschicht in einer Matrize nach einer Kompression,
- Fig. 10: eine Spule mit einer Isolierschicht in einer Matrize nach einer Kompression,
- Fig. 11: eine in einer Matrize komprimierte Spule ohne Isolierschicht sowie
- Fig. 12: eine in einer Matrize komprimierte Spule mit einer Isolierschicht.

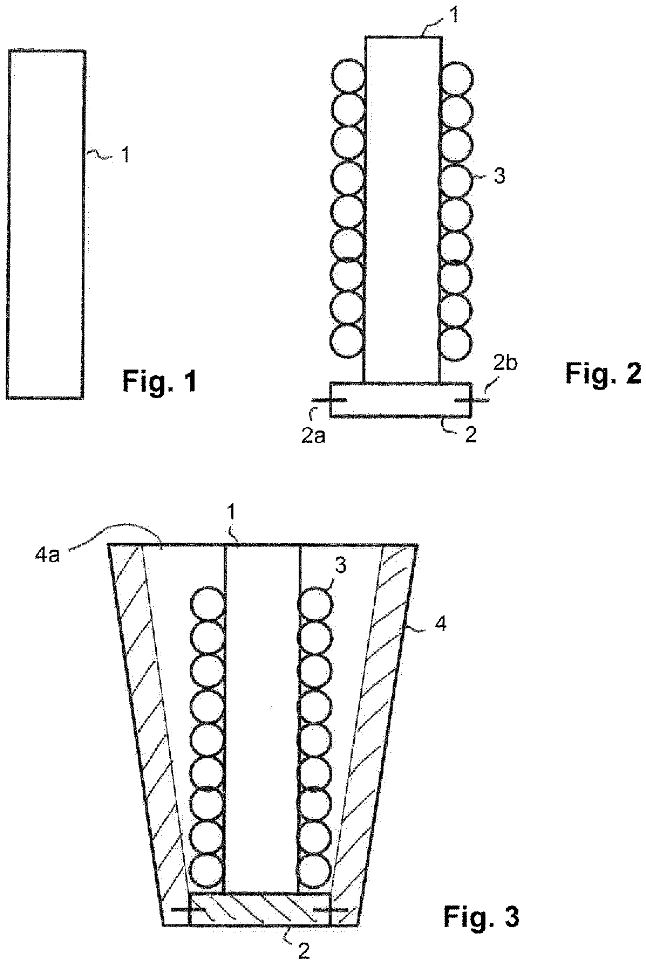

Figur 1 zeigt einen Dorn 1, der beispielsweise zylindrisch ausgebildet sein kann, also einen kreisrunden Querschnitt aufweist. Der Dorn 1 kann jedoch auch einen elliptischen oder polygonalen Querschnitt oder einen anders geformten Querschnitt aufweisen.

In Figur 2 ist ein Dorn 1 dargestellt, der mit einer Verbindungsvorrichtung 2 in Form einer Bodenplatte verbunden ist. Auf den Dorn 1 ist eine Wendel 3 eines strangförmigen Materials aufgewickelt. Das strangförmige Material kann beispielsweise ein Metalldraht mit rundem Querschnitt sein. Das Metall kann beispielsweise Aluminium, eine Aluminiumlegierung, Kupfer oder eine Kupferlegierung sein. Der Metalldraht kann auch einen elliptischen oder anders geformten Querschnitt aufweisen. Die Bodenplatte 2 als Verbindungselement weist aus dieser herausragende Elemente 2a, 2b auf, die mit einem Bajonettverschluss einer Matrize 4 zusammenwirken.

In Figur 3 ist ein Dorn 1 mit aufgewickelter Wendel 3 auf einer Bodenplatte 2 gezeigt, wobei eine konische Matrize 4 mittels einer Bajonettverbindung mit der Bodenplatte 2 und somit auch mit dem Dorn 1 verbunden ist. Die konische Matrize 4 umgibt dabei den Dorn 1 konzentrisch. Die Wendel 3 in Form einer einlagigen Wicklung liegt in dem konischen Hohlraum zwischen der Matrize 4 und dem zylindrischen Dorn 1.

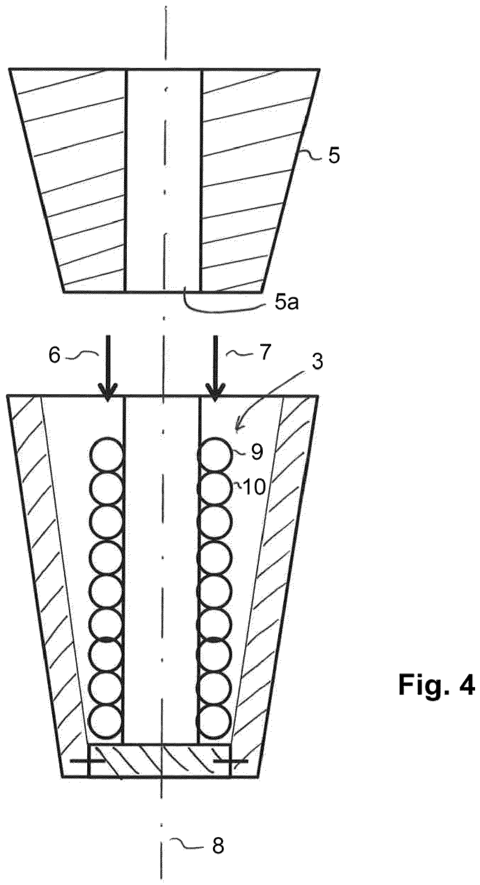

Figur 4 zeigt oberhalb der Matrize 4 einen Stempel 5 einer Druckvorrichtung, deren Antrieb nicht näher dargestellt ist. Der Antrieb kann beispielsweise hydraulisch sein. Die Pfeile 6, 7 zeigen die Richtung an, in der der Stempel 5 in die Matrize 4 eingefahren wird. Der Stempel 5 drückt in Längsrichtung der Anordnung, die mit der Achse 8 bezeichnet ist, auf die Wendel 3. Der Druck durch den Stempel 5 wird so weit erhöht, dass die einzelnen Windungen 9, 10 der Wendel 3 komprimiert werden, so dass die Querschnitte einzelner Windungen umgeformt werden.

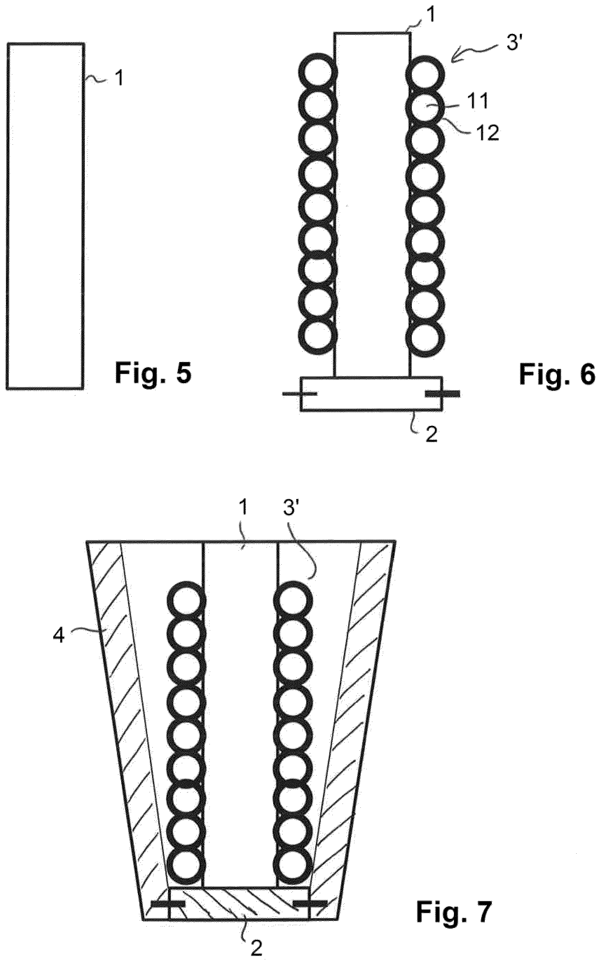

In den Figuren 5 und 6 ist eine Konfiguration mit einem Dorn 1 und einer Bodenplatte 2 dargestellt, wobei auf den Dorn 1 ein strangförmiger Metallkörper 3' in Form einer Wendel aufgewickelt ist und wobei der strangförmige Metallkörper aus einem Draht 11 mit einer Deckschicht 12 besteht. Die Deckschicht ist üblicherweise elektrisch isolierend und kann beispielsweise als Oxidschicht oder auch als Polymer- oder allgemein als Kunststoffschicht ausgebildet sein.

In Figur 7 ist, vergleichbar mit Figur 3, eine Wendel 3' aus einem isolierten Draht in einer Matrize 4 dargestellt.

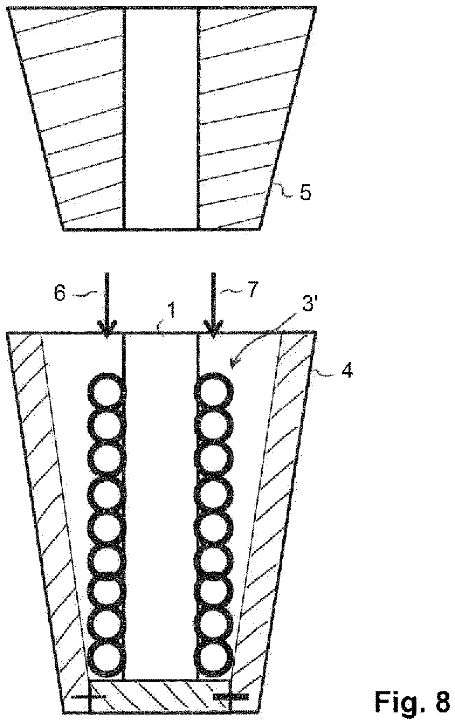

Figur 8 zeigt, vergleichbar mit Figur 4, eine Konstellation mit einer Matrize 4, einem Dorn 1, auf den eine Wendel 3' aufgewickelt ist, sowie einem Stempel 5 zur axialen Kompression der Wendel 3' in Richtung der Pfeile 6, 7. Die Wendel besteht aus einem strangförmigen metallischen Körper, der mit einer Deckschicht versehen ist.

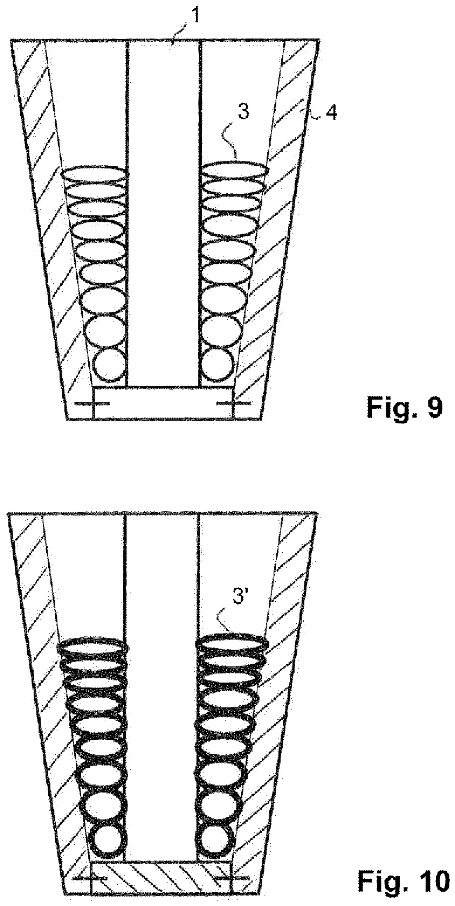

In Figur 9 ist die Wendel 3 in der Matrize 4 nach einem ersten Kompressionsvorgang dargestellt. Es zeigt sich, dass mehrere oder auch alle Windungen des strangförmigen metallischen Körpers/Drahtes bezüglich der Form ihres Querschnitts umgeformt sind. Durch die axiale Kompression sind die einzelnen Windungen in Längsrichtung der Anordnung flachgedrückt worden. Da wegen der konischen Form des Hohlraums in der Matrize 4 für die einzelnen Windungen je nach der Position entlang der Längsachse mehr oder weniger Platz in radialer Richtung zur Verfügung steht, können die einzelnen Windungen mehr oder weniger flach gedrückt werden. Es zeigt sich, dass die in Figur 9 am weitesten unten liegenden Windungen der Wendel am wenigsten flach gedrückt werden, während die obersten Windungen die flachste Form aufweisen, da sie in Radialrichtung der Anordnung am stärksten expandieren können.

In Figur 10 ist eine ähnliche Situation wie in Figur 9 dargestellt, jedoch mit einem Draht, der eine Deckschicht besitzt und mit dieser komprimiert worden ist.

Die Wendel 3, 3' kann noch weiter komprimiert werden, entweder durch Steigerung der Kompressionskraft, die durch einen Stempel 5 wirkt, oder durch wiederholtes schlagartiges Komprimieren. Dadurch können die Zwischenräume zwischen den einzelnen Windungen der Wendel 3, 3' weiter reduziert werden, wodurch die Raumfüllung durch die Wendel verbessert wird. Je nach Duktilität des Materials, aus dem der strangförmige Körper besteht, der die Wendel bildet, können die Zwischenräume praktisch bis auf null reduziert werden.

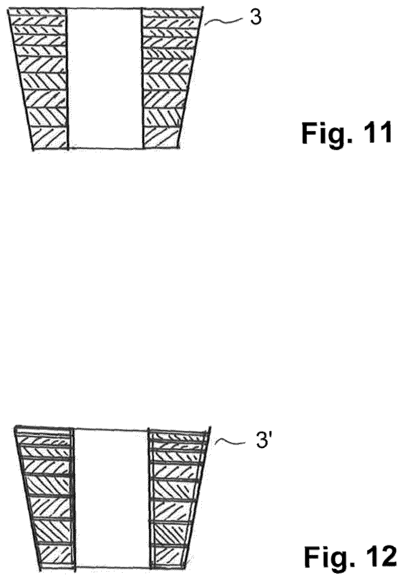

In den Figuren 11 und 12 ist jeweils eine Wendel dargestellt, wobei in Figur 11 die Wendel aus einem strangförmigen Körper ohne Deckschicht besteht, während in Figur 12 eine Wendel aus einem strangförmigen Körper mit einer Deckschicht dargestellt ist. In beiden Fällen ist die Wendel so weit komprimiert worden, dass sie die Zwischenräume zwischen den einzelnen Windungen komplett ausgefüllt hat. Die radial äußere Kontur der Wendel entspricht nun der inneren Kontur der Matrize 4, während die innere zylindrische Kontur der Wendel der Außenfläche des Dorns 1 entspricht. Die Wendel kann nun in dieser Form beispielsweise in eine elektrische Maschine eingebaut werden. Es kann sinnvoll oder notwendig sein, vor dem Einbau eine erste oder eine zusätzliche Deckschicht auf die Oberfläche der einzelnen Windungen der Wendel zu bringen oder eine im Zuge der Kompression der Wendel beschädigte Deckschicht auszuheilen, beispielsweise durch eine Wärmebehandlung.

Im Falle der in Figur 11 dargestellten Wendel kann nach dem Entfernen des Stempels durch eine elastische Rückverformung ein Zwischenraum zwischen den einzelnen Windungen der Wendel entstehen, der mit einem Deckschichtmaterial ausgefüllt werden kann. Durch Tauchen der Wendel in einen Isolierwerkstoff, beispielsweise ein Harz, können dann die einzelnen Windungen gegeneinander isoliert werden. Reichen die Zwischenräume zwischen den einzelnen Windungen der Wendel nicht aus, so kann diese auch während des Aufbringens einer Deckschicht elastisch expandiert werden, bis die Deckschicht durch Trocknen oder Härtung/Polymerisation verfestigt ist.

Eine Wendel der in den Figuren 11 und 12 dargestellten Form kann beispielsweise auf einen Zahn eines Blechpakets in einer elektrischen Maschine aufgesteckt werden. Sind solche Zähne in der elektrischen Maschine sternförmig am Umfang verteilt, so weisen die Zwischenräume zwischen den Zähnen eben die konische Form auf, die durch eine konische Wendel in der dargestellten Form bestmöglich gefüllt wird.

## Patentansprüche

1. Verfahren zur Herstellung eines wendelförmigen Körpers, insbesondere einer elektrischen Spule, aus einem elektrisch leitfähigen Material, bei dem zunächst das Material in Strangform zu einer Wendel (3, 3') mit einer Mehrzahl von Windungen (9, 10) um einen Dorn (1) gewickelt wird, danach der Dorn und die Wendel vor dem Ausüben eines Drucks in einer Matrize (4) platziert wird und eine mit dem Dorn fest verbundene Bodenplatte (2) mittels einer formschlüssigen Verbindung, insbesondere eines Bajonettverschlusses, mit der Matrize verbunden wird und danach in Axialrichtung (8) der Wendel auf diese ein Druck ausgeübt wird, der zu einer Verformung und Kompression der Querschnitte der einzelnen Windungen (9, 10) in der Axialrichtung (8) der Wendel führt.

2. Verfahren nach Anspruch 1, **dadurch gekennzeichnet, dass** mehrmals nacheinander auf die Wendel (3, 3') ein axialer Druck ausgeübt wird, insbesondere in Form von impulsartigen Schlägen.

3. Verfahren nach Anspruch 1, **dadurch gekennzeichnet, dass** der Druck auf die Wendel (3, 3') in mehreren Schritten erhöht wird, wobei insbesondere jeweils nach einer Druckerhöhung der Druck vorübergehend wieder abgesenkt wird.

4. Verfahren nach Anspruch 1, 2 oder 3, **dadurch gekennzeichnet, dass** der Dorn (1) und die Wendel (3, 3') vor dem Ausüben des Drucks in einer Matrize (4) platziert wird, die die Wendel umgibt und die eine radiale Ausdehnung der Wendel nach außen begrenzt.

5. Verfahren nach einem der Ansprüche 1 bis 4, **dadurch gekennzeichnet, dass** der Druck auf die Wendel (3, 3') oder die Stärke der Druckimpulse derart bemessen wird, dass bei wenigstens einer Windung (9, 10) der Wicklung die Höhe in Axialrichtung der Wendel um wenigstens 10%, insbesondere wenigstens 20 %, reduziert wird.

6. Verfahren nach einem der Ansprüche 1 bis 5, **dadurch gekennzeichnet, dass** das strangförmige Material (11) vor oder nach dem Wickeln mit einer elektrisch isolierenden und/oder imprägnierenden Außenschicht (12) versehen wird.

7. Verfahren nach einem der Ansprüche 1 bis 6, **dadurch gekennzeichnet, dass** das strangförmige Material nach der Kompression der Wendel (3,3') mit einer insbesondere elektrisch isolierenden und/oder imprägnierenden Außenschicht (12) versehen wird.

8. Verfahren nach einem der Ansprüche 1 bis 7, **dadurch gekennzeichnet, dass** die Wendel nach der Kompression mit einem elektrisch isolierenden Füllmaterial vergossen wird, das die Zwischenräume zwischen den Windungen der Wendel vollständig ausfüllt und die Windungen der Wendel voneinander elektrisch isoliert.

9. Vorrichtung zur Durchführung des Verfahrens nach einem der Ansprüche 1 bis 8, **gekennzeichnet durch** eine Matrize (4), eine Verbindungsvorrichtung in Form einer Bodenplatte (2) zur Verbindung der Matrize mit einem Dorn (1) zum Aufwickeln der Wendel (3, 3') sowie eine Druckvorrichtung mit einem Stempel (5), der insbesondere eine Ausnehmung (5a) zur Aufnahme des Dorns aufweist.

10. Vorrichtung nach Anspruch 9 **dadurch gekennzeichnet, dass** die Matrize (4) einen konusförmigen Hohlraum zur Aufnahme der komprimierten Wendel (3, 3') aufweist.

## Claims

1. A method for producing a helical body, in particular an electrical coil, from an electrically conductive material, in which first the material, in a strand shape, is wound around a mandrel (1) to form a helix (3, 3') having a multitude of turns (9, 10), then, prior to exerting a pressure, the mandrel and the helix are placed into a die (4), and a base plate (2) fixedly connected to the mandrel is connected to the die by way of a form-locked connection, in particular a bayonet catch, and then a pressure is exerted on the helix in an axial direction (8) thereof, which results in a deformation and a compression of the cross-sections of the individual turns (9, 10) in the axial direction (8) of the helix.

2. The method according to claim 1, **characterized in that** an axial pressure is consecutively exerted multiple times on the helix (3, 3'), in particular in the form of pulse-like strikes.

3. The method according to claim 1, **characterized in that** the pressure on the helix (3, 3') is increased in multiple stages, wherein, in particular, the pressure is temporarily lowered again in each case after an increase in pressure.

4. The method according to claim 1, 2 or 3, **characterized in that** the mandrel (1) and the helix (3, 3'), prior to the pressure being exerted, are placed in a die (4) which surrounds the helix and limits a radial expansion of the helix to the outside.

5. A method according to any one of claims 1 to 4, **characterized in that** the pressure on the helix (3, 3'), or the intensity of the pressure pulses, is selected in such a way that, in the case of at least one turn (9, 10) of the winding, the height in the axial direction of the helix is reduced by at least 10%, and in particular at least 20%.

6. A method according to any one of claims 1 to 5, **characterized in that** the strand-shaped material (11) is provided with an electrically insulating and/or impregnating outer layer (12) before or after the winding process.

7. A method according to any one of claims 1 to 6, **characterized in that** the strand-shaped material is provided with an in particular electrically insulating and/or impregnating outer layer (12) after the compression of the helix (3, 3').

8. The method according to any of claims 1 to 7, **characterized in that** the helix is sealed with an electrically insulating filler material by casting after compression, which completely fills the intermediate spaces between the turns of the helix and electrically insulates the turns of the helix from one another.

9. A device for carrying out the method according to any one of claims 1 to 8, **characterized by** a die (4), a connecting device in the form of a base plate (2) for connecting the die to a mandrel (1) for winding the helix (3, 3'), and a pressure device comprising a ram (5), which in particular includes a recess (5a) for accommodating the mandrel.

10. The device according to claim 9, **characterized in that** the die (4) includes a conical cavity for accommodating the compressed helix (3, 3').

## Revendications

1. Procédé de fabrication d'un corps hélicoïdal, en particulier d'une bobine électrique, à partir d'un matériau électriquement conducteur, dans lequel le matériau en forme de toron est d'abord enroulé en une spirale (3, 3') présentant une pluralité de spires (9, 10) autour d'un mandrin (1), après quoi le mandrin et la spirale sont placés dans une matrice (4) avant qu'une pression ne soit exercée et une plaque de base (2) solidaire du mandrin est reliée à la matrice au moyen d'une connexion par complémentarité de forme, en particulier une fermeture à baïonnette, puis dans la direction axiale (8) de la spirale, une pression est exercée sur celle-ci, ce qui entraîne une déformation et une compression des sections transversales des spires individuelles (9,10) dans la direction axiale (8) de la spirale.

2. Procédé selon la revendication 1, **caractérisé en ce qu'**une pression axiale est exercée sur la spirale (3, 3') plusieurs fois de suite, en particulier sous la forme d'impacts pulsés.

3. Procédé selon la revendication 1, **caractérisé en ce que** la pression sur la spirale (3, 3') est augmentée en plusieurs étapes, dans lequel la pression est en particulier temporairement réduite à nouveau après chaque augmentation de pression.

4. Procédé selon la revendication 1, 2 ou 3, **caractérisé en ce que** le mandrin (1) et la spirale (3, 3') sont placés dans une matrice (4) qui entoure la spirale et limite une extension radiale de la spirale vers l'extérieur avant qu'une pression ne soit exercée.

5. Procédé selon l'une quelconque des revendications 1 à 4, **caractérisé en ce que** la pression sur la spirale (3, 3') ou l'intensité des impulsions de pression est dimensionnée de telle sorte que dans au moins une spire (9,10) de l'enroulement, la hauteur dans la direction axiale de la spirale est réduite d'au moins 10 %, en particulier d'au moins 20 %.

6. Procédé selon l'une des revendications 1 à 5, **caractérisé en ce que** le matériau en forme de toron (11) est pourvu d'une couche extérieure électriquement isolante et/ou d'imprégnation (12) avant ou après l'enroulement.

7. Procédé selon l'une des revendications 1 à 6, **caractérisé en ce qu'**après la compression de la spirale (3, 3'), le matériau en forme de toron est muni d'une couche extérieure (12) en particulier électriquement isolante et/ou d'imprégnation.

8. Procédé selon l'une des revendications 1 à 7, **caractérisé en ce que** la spirale est coulée après la compression avec un matériau de remplissage électriquement isolant qui comble complètement les interstices entre les spires de la spirale et isole électriquement les spires de la spirale les unes des autres.

9. Dispositif pour la mise en oeuvre du procédé selon l'une des revendications 1 à 8, **caractérisé par** une matrice (4), un dispositif de liaison sous la forme d'une plaque de base (2) pour relier la matrice à un mandrin (1) pour enrouler la spirale (3, 3') et un dispositif d'impression avec un poinçon (5) qui présente notamment un évidement (5a) pour recevoir le mandrin.

10. Dispositif selon la revendication 9, **caractérisé en ce que** la matrice (4) présente une cavité en forme de cône pour recevoir la spirale comprimée (3, 3').
